# EUROPEAN PATENT APPLICATION

(11) **EP 4 722 865 A1**
(43) Date of publication of application: **08.04.2026**
(21) Application number: 24818694.2
(22) Date of filing: 05.06.2024
(51) Int. Cl.: G06F 3/01

(54) **MULTI-WINDOW PROCESSING METHOD AND SYSTEM IN THREE-DIMENSIONAL SPACE, AND DEVICE**

(30) Priority: 05.06.2023 CN 202310659375
(71) Applicant: Beijing Irisview Technology Co., Ltd., Beijing 100083 (CN)
(72) Inventor: YUE, Yating, Beijing 100083 (CN); FAN, Shunhao, Beijing 100083 (CN)
(74) Representative: IP TRUST SERVICES
(86) International application number: PCT/CN2024/097580
(87) International publication number: WO 2024/251162

(57) **Abstract**

The present invention relates to the field of computer systems. Provided are a multi-window processing method and system in a three-dimensional space, and a device. The method comprises: receiving attribute information of one or more windows, wherein the windows comprise a two-dimensional window and/or a three-dimensional window; generating a corresponding transformation matrix according to the attribute information of the one or more windows; and processing the one or more windows on the basis of the transformation matrix, wherein processing the one or more windows on the basis of the transformation matrix comprises: displaying the one or more windows on the basis of the transformation matrix, and transforming an event from a three-dimensional space to a target window on the basis of the transformation matrix and sending same to the target window. By means of the present invention, one or more two-dimensional windows and one and more three-dimensional windows can be simultaneously displayed in a three-dimensional environment, such that a user simultaneously performs interaction on the windows, thereby increasing the application scenarios of an extended-reality device, and improving the user experience.

## Description

### CROSS-REFERENCE TO RELATED APPLICATIONS

The present application claims priority of the Chinese patent No. 202310659375.8, entitled "Multi-Window Processing Method, Device and System in Three-Dimensional Space" and filed on June 05, 2023, the entirety of which is hereby incorporated by reference.

### TECHNICAL FIELD

The present disclosure relates to the field of computer systems and human-machine interaction, in particular to a multi-window processing method, device and system in a three-dimensional space.

### BACKGROUND

Currently, the mainstream usage scenarios on Virtual Reality (VR) devices are gaming and movie-watching, primarily providing an immersive experience where a single three-dimensional (3D) application occupies the entire space, and users can only interact with one three-dimensional application at a time. However, in many situations, users have multi-tasking operations requirements, that is, they hope to interact with other applications while using one on a VR device. For example, when users receive messages, text messages or phone calls while playing games on a VR device, they hope to see pop-up information prompts and be able to reply to messages easily without exiting or suspending the currently used application.

On Augmented Reality (AR) or Mixed Reality (MR) devices, users can see the real environment, and the user experience is predominantly non-immersive. Users desire to run multiple pieces of three-dimensional content simultaneously within a 360-degree space. For example, in an office setting, users might want to place a three-dimensional alarm clock application, a three-dimensional calendar application and a three-dimensional notepad application on the desk at the same time. However, with current technology, users can only open one three-dimensional application in the space at a time, while other applications will be suspended or hidden, resulting in a poor user experience.

Traditional PC operating systems, such as Windows, are two-dimensional (2D) multi-window systems, where users interact with multiple applications through multiple two-dimensional windows on a single two-dimensional screen. Extended reality devices (including AR, VR, MR and other devices) provide users with display and interaction capabilities in a three-dimensional space. Therefore, there is an urgent need for a method to achieve a multi-window effect in a three-dimensional space, thereby further realizing the three-dimensional multi-window capabilities, enhancing the user experience with extended reality devices, and facilitating the development of three-dimensional content for a non-immersive mode.

### SUMMARY

The present disclosure aims at solving the problem in the prior art that an extended reality device can only display a window from a single application, thereby preventing a user from interacting with multiple applications simultaneously, Consequently, the window display mode of existing extended reality devices offers limited user interaction modes and results in a poor user experience.

To solve the technical problem, in an aspect of the present disclosure, there is provided a multi-window processing method in a three-dimensional space, including:
step S101 of receiving attribute information of one or more windows, wherein the windows include a two-dimensional window and/or a three-dimensional window;
step S103 of generating a corresponding transformation matrix according to the attribute information of the one or more windows; and
step S105 of processing the one or more windows based on the transformation matrix.

In a second aspect of the present disclosure, there is provided a multi-window processing system in a three-dimensional space, including:
a receiving unit for receiving attribute information of one or more windows, wherein the windows include a two-dimensional window and/or a three-dimensional window;
a transformation matrix generation unit for generating a corresponding transformation matrix according to the attribute information of the one or more windows; and
a processing unit for processing the one or more windows based on the transformation matrix.

In a third aspect of the present disclosure, there is provided an extended reality device, including a memory, a processor and a computer program stored in the memory and executable on the processor, wherein the processor, when executing the computer program, implements instructions of the method described in any one of above-mentioned embodiments.

In a fourth aspect of the present disclosure, there is provided a multi-window processing system in a three-dimensional space, including an extended reality device as claimed in claim 24 and a server, wherein the server includes a memory, a processor and a computer program stored in the memory and executable on the processor, wherein the processor, when executing the computer program, implements instructions of the method described in any one of above-mentioned embodiments.

In a fifth aspect of the present disclosure, there is provided a computer storage medium having stored thereon a computer program which, when executed by a processor of an extended reality device, implements instructions of the method described in any one of the above-mentioned embodiments.

The multi-window processing method, device and system in a three-dimensional space provided by the present disclosure receive attribute information of one or more windows, wherein the windows include a two-dimensional window and/or a three-dimensional window; generate a corresponding transformation matrix according to the attribute information of the one or more windows; and process the one or more windows based on the transformation matrix. Herein, the processing of the one or more windows based on the transformation matrix includes: displaying the one or more windows based on the transformation matrix, and transforming an event in the three-dimensional space into a target window and sending the transformed event to the target window. Based on the transformation matrix and a user's angle of observation, different applications are composited and displayed. The present disclosure enables simultaneous display of one or more two-dimensional windows and three-dimensional windows in a three-dimensional environment, thereby allowing users to interact with these windows concurrently, expanding the application scenarios of extended reality devices and enhancing the user experience.

To make the above and other objectives, features, and advantages of the present disclosure more apparent and understandable, preferred embodiments are described below in detail with reference to the accompanying drawings.

### BRIEF DESCRIPTION OF DRAWINGS

In order to more clearly explain the technical solutions in the embodiments of the present disclosure or in the prior art, a brief introduction to the figures needed in the description of the embodiments or the prior art will be given below. Obviously, the figures described below are only some embodiments of the present disclosure, and for persons having ordinary skill in the art, other figures may also be obtained based on these figures without paying any creative effort.
FIG. 1A shows a flowchart of a multi-window processing method in a three-dimensional space according to an embodiment of the present disclosure;
FIG. 1B shows a first specific flowchart of a multi-window processing method in a three-dimensional space according to an embodiment of the present disclosure;

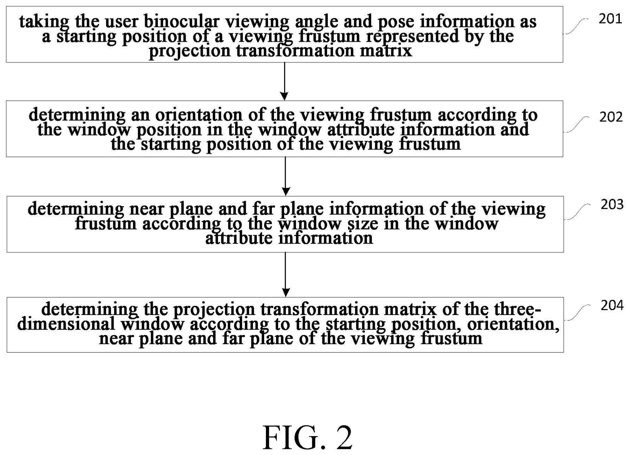

FIG. 2 shows a flowchart of a process for determining a projection transformation matrix according to an embodiment of the present disclosure;
FIG. 3 shows a second specific flowchart of a multi-window processing method in a three-dimensional space according to an embodiment of the present disclosure;
FIG. 4A shows a schematic diagram of the coordinate systems of a three-dimensional window and a two-dimensional window according to an embodiment of the present disclosure;
FIG. 4B shows a schematic diagram of multi-window display in a three-dimensional space in an extended reality device according to an embodiment of the present disclosure;
FIG. 5 shows a third specific flowchart of a multi-window processing method in a three-dimensional space according to an embodiment of the present disclosure;
FIG. 6 shows a fourth specific flowchart of a multi-window processing method in a three-dimensional space according to an embodiment of the present disclosure;
FIG. 7 shows a fifth specific flowchart of a multi-window processing method in a three-dimensional space according to an embodiment of the present disclosure;
FIG. 8 shows a sixth specific flowchart of a multi-window processing method in a three-dimensional space according to an embodiment of the present disclosure;
FIG. 9 shows a flowchart of a multi-window processing method on a three-dimensional multi-window system side according to an embodiment of the present disclosure;
FIG. 10 shows a flowchart of a multi-window processing method on an application side according to an embodiment of the present disclosure;
FIG. 11 shows a structural diagram of a multi-window processing device in a three-dimensional space on a three-dimensional multi-window system side according to an embodiment of the present disclosure;
FIG. 12 shows a structural diagram of a multi-window processing device in a three-dimensional space on an application side according to an embodiment of the present disclosure;
FIG. 13 shows a structural diagram of an extended reality device according to an embodiment of the present disclosure.

### Explanation of the reference signs:

401. window decoration information
1101. first interaction unit
1102. projection transformation matrix calculation unit
1103. second interaction unit
1104. third interaction unit
1105. compositing unit
1201. window information sending unit
1202. projection transformation matrix receiving unit
1203. interaction event processing unit
1204. rendering unit
1205. rendering-related information sending unit
1302. extended reality device
1304. processor
1306. memory
1308. drive mechanism
1310. input/output module
1312. input device
1314. output device
1316. presentation device
1318. graphical user interface
1320. network interface
1322. communication link
1324. communication bus

### DESCRIPTION OF EMBODIMENTS

Clear and comprehensive descriptions of the technical solutions in the embodiments of the present disclosure will be given below with reference to the figures in the embodiments of the present disclosure. Obviously, the embodiments described are only part of, rather than all of, the embodiments of the present disclosure. Based on the embodiments in the present disclosure, all other embodiments obtained by persons having ordinary skill in the art without paying any creative effort should fall within the scope of protection of the present disclosure.

It should be noted that the terms "first", "second", etc. in the Description, the claims and the figures of the present disclosure are intended to distinguish similar objects, rather than to describe a specific sequence or order. It should be understood that the data used in this way may be interchanged where appropriate, so that the embodiments of the present disclosure described herein can be implemented in a sequence other than those illustrated or described herein. In addition, the terms "comprise", "include" and "have", as well as any variations thereof, are intended to cover non-exclusive inclusions. For example, processes, methods, devices, products or equipment that include a series of steps or units do not have to be limited to those steps or units clearly listed, but may include other steps or units that are not clearly listed or are inherent to these processes, methods, products or equipment.

The Description provides the method operation steps as described in the embodiments or flowcharts, but more or fewer operation steps may be included based on conventional without creative effort. The sequence of steps listed in the embodiments is merely one of the plurality of step execution sequences and does not represent a unique execution sequence. In actual implementation, systems or device products may be executed sequentially or in parallel according to the methods shown in the embodiments or drawings.

In existing extended reality devices, one three-dimensional application occupies the entire space, and users can only interact with one three-dimensional application at a time. In practice, however, users need to use multiple three-dimensional applications simultaneously, or use two-dimensional and three-dimensional applications in a mixed manner, or use multiple three-dimensional windows created by one or more applications simultaneously, or use a two-dimensional window and a three-dimensional window in a mixed manner in the extended reality device (for example, users need to reply to instant messages while watching three-dimensional videos or playing three-dimensional games, to view multiple windows at the same time to select a target window, etc.). The systems of the existing extended reality devices cannot interact with multiple three-dimensional applications or with both two-dimensional and three-dimensional applications simultaneously. Therefore, the existing extended reality devices have limitations in their usage scenarios, fail to meet the user demands in terms of usage scenarios, and result in a poor user experience.

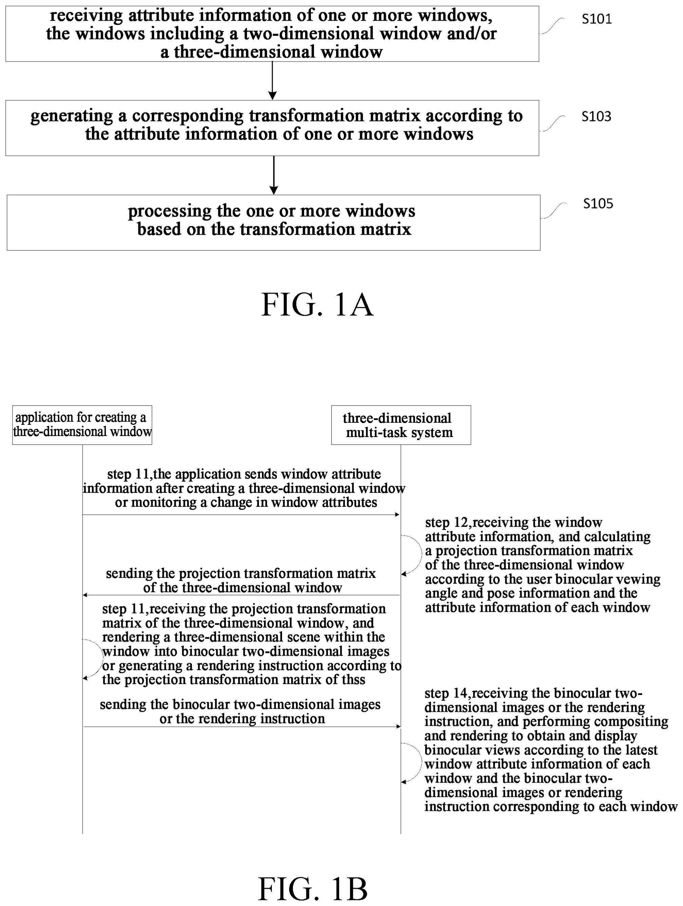

To solve the technical problem that exists in the prior art, an embodiment of the present application provides a multi-window processing method in a three-dimensional space, which, as shown in FIG. 1A, includes:
step S101 of receiving attribute information of one or more windows, wherein the windows include a two-dimensional window and/or a three-dimensional window;
step S103 of generating a corresponding transformation matrix according to the attribute information of the one or more windows; and
step S105 of processing the one or more windows based on the transformation matrix.

Specifically, a three-dimensional window is a displayable and interactable subspace within a three-dimensional space. In detail, the subspace (i.e. three-dimensional window) possesses the following characteristics:
(1) the subspace is a 360-degree space or a three-dimensional space having its own independent coordinate system;
(2) the subspace can be embedded into a space through a transformation matrix, for example, the subspace defined by a window may be embedded into the overall three-dimensional space through a transformation matrix;
(3) the boundaries of display/interaction of the subspace may be set manually, for example, as a rectangle (for a two-dimensional window) or a cuboid (for a three-dimensional window), or, the boundaries of display/interaction of the subspace may be determined based on the attribute information of the windows, such as a projection transformation matrix (for a three-dimensional window) determined according to a window size; the boundaries of display/interaction of the subspace may also be determined by content objects contained within the subspace, for example, any region containing an object content corresponding to the window constitutes a displayable and interactable area of the subspace.

The above-mentioned two-dimensional and three-dimensional windows may be displayed on an extended reality device, and the two-dimensional and three-dimensional windows may come from the same or different applications (i.e. different processes). These applications may be installed locally on the extended reality device, on an access device of an extended reality device, on a server, or on a cloud virtual machine.

The two-dimensional window described herein is the same as those of the existing intelligent terminals and computers, but additionally possesses the attributes of position, rotation and scaling in a three-dimensional space. The communication between an application (window) and a three-dimensional multi-window system in an extended reality device may be achieved by a message passing interface, such as IPC.

The transformation matrix generated in step S103 may be generated by the three-dimensional multi-window system, and may also be generated and provided by a window. When the transformation matrix is provided by a window, it may also serve as a parameter within the attribute information of the window.

The transformation matrix generated in step S103 enables data transformation between the world coordinate system and the window coordinate system. The transformation matrix is updated based on user operations, system events or triggers from the application's own logic.

Step S105 enables composite display of multiple two-dimensional windows and/or three-dimensional windows, and on the basis of the composite display of multiple windows, enables interaction with each of these windows. The present disclosure serves to expand the application scenarios of extended reality devices and enhance the user experience.

In an embodiment of the present disclosure, the receiving of attribute information of one or more windows in step S101 includes: receiving attribute information of the windows generated by an event from the one or more windows. Specifically, an event of a window may be triggered by a change in the application's own logic or by a control device.

In an embodiment of the present disclosure, step S105 includes:
transforming an event from the three-dimensional space to the one or more windows according to the transformation matrix, and sending the transformed event to a corresponding window.

In an embodiment of the present disclosure, step S105 further includes:
processing, by the one or more windows, an event according to the one or more windows' own logic, and generating corresponding attribute information of the windows; and
compositing the attribute information of the windows generated by the one or more windows.

In this embodiment, the attribute information of the window at least includes display information, wherein the display information includes: image information (two-dimensional images of two-dimensional windows and three-dimensional scenes of three-dimensional windows) or a rendering instruction (for guiding the generation of a rendered image).

In a specific implementation, compositing the attribute information of the windows generated by the one or more windows includes: determining a projection transformation matrix based on the transformation matrix and user binocular viewpoint and pose information; and based on the projection transformation matrix, compositing and rendering the display information in the attribute information of the windows generated by the one or more windows to obtain and display binocular views.

In an embodiment of the present disclosure, the attribute information of the window includes at least one of the coordinate system, position, rotation and size.

In an embodiment of the present disclosure, the attribute information of the window further includes: window decoration information, wherein the window decoration information includes an UI control for controlling the windows. After the above-mentioned compositing step, the specific window decoration information is added to a corresponding position in the composited view.

In an embodiment of the present disclosure, the attribute information of the window further includes: display information, and/or interaction information, and/or self-logic triggering information. The display information is generated when a window is created or when there is a change in a window attribute, or is generated when a change in the user's viewpoint is triggered. To be specific, the display information is a two-dimensional view to be displayed, and for a three-dimensional window, its two-dimensional view is determined based on the projection transformation matrix. The display information may also be a rendering instruction. The interaction information is generated when an interaction event of the window is produced by a user input. The self-logic triggering information is generated when an application's own logic is changed, and is used to modify the transformation matrix, to indicate a switch between an immersive mode and a window mode, or to trigger the window decoration information.

In an embodiment of the present disclosure, the processing of the one or more windows based on the transformation matrix includes:
determining a projection transformation matrix based on the attribute information of the windows and the user binocular viewpoint and pose information; and
processing the one or more windows based on the projection transformation matrix, that is, compositing and rendering the one or more windows to obtain binocular views, and displaying the binocular view.

In a specific embodiment of the present disclosure, the processing of the one or more windows based on the projection transformation matrix includes:
sending the projection transformation matrix to a corresponding window;
rendering, by the corresponding window, a scene within the window using the projection transformation matrix to obtain binocular two-dimensional images; and
performing compositing and rendering according to the latest attribute information of the window for the corresponding window and the binocular two-dimensional images corresponding to the corresponding window to obtain and display binocular views of the three-dimensional space.

In a specific embodiment of the present disclosure, the processing of the one or more windows based on the projection transformation matrix includes:
generating, by the window, a rendering instruction according to an application logic; and
performing compositing and rendering according to latest attribute information of the window for the corresponding window and the rendering instruction to obtain and display binocular views of the three-dimensional space.

In a specific embodiment of the present disclosure, the processing of the one or more windows based on the projection transformation matrix includes:
sending the projection transformation matrix to a corresponding window;
generating, by the corresponding window, a rendering instruction using the projection transformation matrix; and
performing compositing and rendering according to latest attribute information of the window for the corresponding window and the rendering instruction to obtain and display binocular views of the three-dimensional space.

Further, decoration content is added based on the window decoration information prior to performing compositing and rendering, and the compositing and rendering are completed to obtain and display the binocular view of the three-dimensional space.

In an embodiment of the present disclosure, step S105 further includes: generating intersection information based on an interaction event of the window and the attribute information of the window; generating a coordinate system of a target window based on the intersection information and the interaction event of the window, and sending the coordinate system of the target window to the target window for the application of the target window to respond to the interaction event of the window.

The determination process of the intersection information can be made to subsequent embodiments, and will not be elaborated here.

For a three-dimensional window, it has an immersive mode and a window mode. In the immersive mode, contents can be viewed by the user from all the angles within the window. In the window mode, contents can be displayed within a range of the window, or can be displayed without being limited by the window size. In order to increase the fun or completeness, etc., objects beyond the range of the window can be displayed, and a user can interact with the contents displayed in each of the modes.

In an embodiment of the present disclosure, when the target window enters the immersive mode, the subspace corresponding to the target window is transformed into the three-dimensional space.

Further, in some embodiments, the other windows remain unchanged, thereby achieving a superimposed display of the contents of the target window and the contents of the other windows.

In an embodiment of the present disclosure, on the basis of the superimposed display of a plurality of windows in the immersive mode, the method further includes:
receiving at least one interaction event input by a user;
for each interaction event, if the interaction event includes pointing information, determining the window pointed to by the pointing information and the intersection information, and taking the window to which a pixel within the range pointed to by the pointing information belongs as the target window; and
transforming the intersection information into the coordinate system of the target window, and sending the transformed intersection information and the interaction event to the application of the target window for processing.

This embodiment enables interaction with the contents displayed in the immersive mode and the contents displayed in the superimposed windows on the basis of the superimposed display of a plurality of windows in the immersive mode, thereby enhancing the user experience.

In an embodiment of the present disclosure, when receiving attribute information of a window exceeding the range of the target window, the interaction information is transformed into the coordinate system of the target window, and the transformed interaction information and the interaction event are sent to the target window for processing.

In an embodiment of the present application, there is also provided a multi-window processing system in a three-dimensional space, including:
a receiving unit for receiving attribute information of one or more windows, wherein the windows include a two-dimensional window and/or a three-dimensional window;
a transformation matrix generation unit for generating a corresponding transformation matrix according to the attribute information of the one or more windows; and
a processing unit for processing the one or more windows based on the transformation matrix.

An embodiment of the present disclosure also provides a multi-window processing system in a three-dimensional space, including an extended reality device as described in the above-mentioned embodiments and a server, the server includes a memory, a processor and a computer program stored in the memory and executable on the processor, wherein the processor, when executing the computer program, implements instructions of the method described in any of the above-mentioned embodiments.

An embodiment of the present disclosure also provides a multi-window processing method in a three-dimensional space, applied in a device supporting display of three-dimensional content or a server of a device supporting display of three-dimensional content, an application capable of creating a three-dimensional window being incorporated in the three-dimensional task system, the method specifically, as shown in FIG. 1B, including:
step 11, in which the application, after creating a three-dimensional window or monitoring a change in an attribute of the window, sends attribute information of the window to a three-dimensional multi-window system;
step 12, in which the three-dimensional multi-window system receives the attribute information of the window sent upon the creation of the three-dimensional window or a change in a window attribute, and calculates a projection transformation matrix of the three-dimensional window according to the user binocular viewpoint and pose information and the attribute information of each window, and sends the projection transformation matrix to the application of the corresponding three-dimensional window;
step 13, in which the application receives the projection transformation matrix of the three-dimensional window, and renders a three-dimensional scene within the window into binocular two-dimensional images or generates a rendering instruction according to the projection transformation matrix of the three-dimensional window; and
step 14, in which the three-dimensional multi-window system receives the binocular two-dimensional images or the rendering instruction, and performs compositing and rendering according to the latest attribute information of the window for each window and the binocular two-dimensional images or rendering instruction corresponding to each window to obtain and display binocular views.

This embodiment can realize simultaneous display of a plurality of three-dimensional windows provided by a same application or a plurality of applications in a three-dimensional environment, thereby allowing a user to interact with the plurality of three-dimensional windows at the same time, expanding the application scenarios of the extended reality device and enhancing the user experience. Meanwhile, this embodiment can also, in the window mode, enable the view within the window to change according to the user's viewpoint and pose, thereby enhancing the user experience.

In detail, step 11 is executed upon creation of a three-dimensional window or upon a change in an attribute of a three-dimensional window. To be specific, a window creation instruction may be input via a control device connected to the extended reality device, the control device including, but not limited to, an intelligent terminal, a controller, etc. The change in a window attribute is controlled by the application according to a preset logic, or by an interaction event input by a user through the control device. By way of example, the way to create a window is, for example, to trigger by a user an application from the list of installed applications, which list may be arranged vertically, horizontally, in a ring pattern, etc., and an attribute change of a three-dimensional window may be triggered, for example, by a user dragging the boundaries and corners of the window. The present disclosure imposes no limitations on the manner of creating a window and triggering an attribute change of a three-dimensional window.

In some embodiments, the attribute information of the window includes: basic information such as window position, window size, window rotation and window dimension type, and window canvas information. Window position is represented by the three-dimensional coordinates of the center position of the window, and window size is used to limit the three-dimensional size of the window. Window rotation refers to the rotation angle of the window, and is a basic attribute of a window in a three-dimensional space for guiding the compositing and rendering on a two-dimensional binocular image. Window dimension type is used to distinguish whether a window is a two-dimensional window or a three-dimensional window. Window canvas information is used to carry the result of the window rendering a three-dimensional scene into a two-dimensional binocular image, and is used for the

The binocular two-dimensional images in step 13 are generated when the view within the three-dimensional window changes or when the projection transformation matrix changes. That is, whenever the view in the three-dimensional window or the projection transformation matrix changes, the three-dimensional window will generate binocular two-dimensional images or a rendering instruction, which is then sent to the three-dimensional multi-window system. To be specific, the binocular two-dimensional images comprise a separate image for each of the left and right eyes. The specific implementation steps of rendering a three-dimensional scene inside the window based on the projection transformation matrix can refer to the existing process of rendering a three-dimensional scene into a two-dimensional image, and will not be elaborated here.

In step 13, generating a rendering instruction according to the projection transformation matrix of the three-dimensional window includes: determining a three-dimensional content within the three-dimensional window according to the projection transformation matrix, that is, determining a three-dimensional object within the range of the viewing frustum represented by the projection transformation matrix; and generating the rendering instruction according to the three-dimensional content within the three-dimensional window.

In detail, the three-dimensional content within the three-dimensional window may be directly generated by the application, and may also be obtained through file reading and parsing. The three-dimensional content may be described by way of traditional three-dimensional models such as geometry and materials, read from three-dimensional model file formats such as fbx and obj, or described by other means such as NeRF. The file of the three-dimensional content may also be in other custom file formats. The application parses and converts the three-dimensional content into metadata of the rendering object, wherein the metadata includes descriptive information such as the model geometry information, text content and material of the rendering object, as well as attribute information such as position, rotation and scaling of the rendering object.

In specific implementation, in order to provide the users with a more complete and richer experience, the application may choose to determine the display range not based on the window size, but to determine the range of the subspace represented by the window according to the content of the rendering object intended to be displayed in the window. If the space occupied by all the objects within the window belongs to the range of the subspace, which window is being interacted with in the current interaction event is determined based on the interaction with the objects within the window. In such a scenario, the system sends the user's projection transformation matrix (which is independent of the window size) to the application, and the application may display contents outside the range of the window, enabling more flexible application effects. If the application includes a tree and a bird's nest, and a little bird can fly out of the nest and fly freely over a larger area in the space, to achieve this effect, the application can specify to use the content of the rendering object to determine the range of the subspace represented by the window, so as to achieve the effect of allowing the bird to fly freely over a larger area.

Step 14 serves to unify the image from the window coordinate system to the world coordinate system. The binocular view refers to a separate image for each of the left and right eyes. Each window refers to the windows that have been created. In specific implementation, the update frequency of the view in each window is different. In a window currently displayed on the extended reality device, if there is a change in a window attribute, steps 11 to 13 will be executed, and if the user's binocular viewpoint is changed, steps 12 to 13 will be executed, and then compositing and rendering are performed according to the current latest attribute information of the changed window and the historical latest attribute information of the other unchanged windows, the binocular two-dimensional images or rendering instruction corresponding to the changed window, and the binocular two-dimensional images or rendering instructions corresponding to the other unchanged windows, to obtain binocular views.

In this embodiment, by calculating the projection transformation matrix of each three-dimensional window, it is possible to ensure the correctness of projection of the three-dimensional scene within each window onto the two-dimensional plane, thereby enabling the user to perceive the correct display effect.

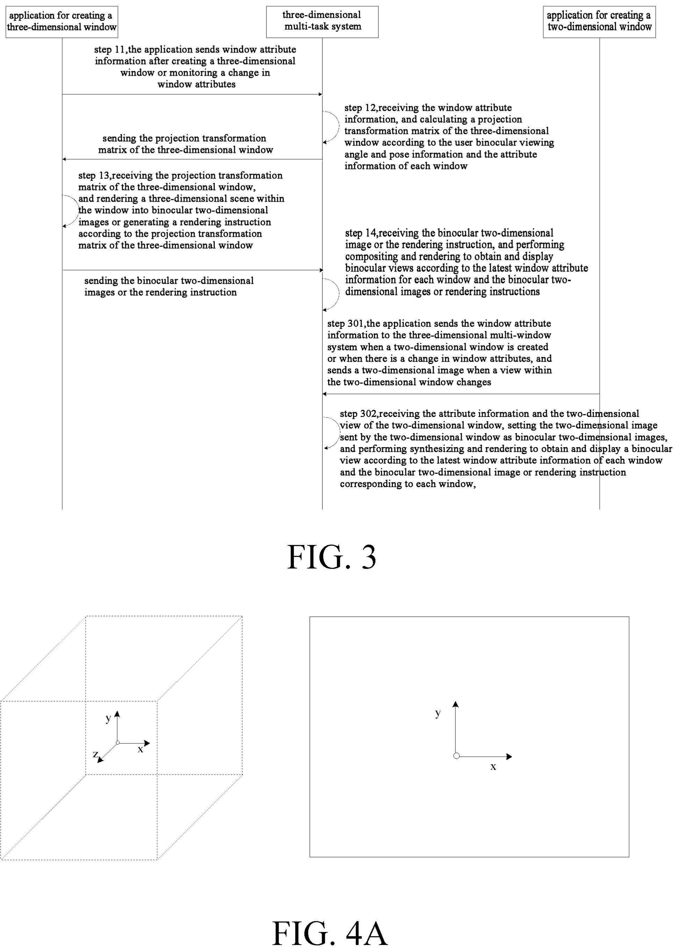

In a further embodiment of the present disclosure, an application capable of creating a two-dimensional window is further incorporated into the three-dimensional multi-window system, wherein the application for creating a two-dimensional window and the application for creating a three-dimensional window may be the same application; that is, a single application may create both two-dimensional and three-dimensional windows. To be specific, as shown in FIG. 3, the method further includes:
step 301, in which the application sends the attribute information of the window to the three-dimensional multi-window system when a two-dimensional window is created or when there is a change in a window attribute, and sends a two-dimensional image when a view within the two-dimensional window changes; and
step 302, in which the three-dimensional multi-window system receives the attribute information and two-dimensional view of the two-dimensional window, sets the two-dimensional image sent by the two-dimensional window as binocular two-dimensional images, and performs compositing and rendering according to the latest attribute information of the window for each window and the binocular two-dimensional images or rendering instruction corresponding to each window to obtain and display binocular views.

In implementation, step 301 and step 11 may be executed simultaneously. For a two-dimensional application, the left and right eye images are not distinguished. During compositing and rendering, as shown in FIG. 4A, the z-direction value of the two-dimensional window of the application is set to 0, and the two-dimensional image of the window of the application is set as binocular two-dimensional images, so that the compositing and rendering of the two-dimensional image can be realized by step 14. In FIG. 4A, the left side shows the coordinate system of the three-dimensional window, and the right side shows the coordinate system of the two-dimensional window.

When there is a change in a window attribute, the view within the window will also change accordingly, that is, when the attribute information of the window is received, the two-dimensional image is also received.

When there is a change in the view within a window in the extended reality device, if a three-dimensional window changes, steps 12 to 14 are executed to update the window interface, and if a two-dimensional window changes, step 14 is executed to update the window interface.

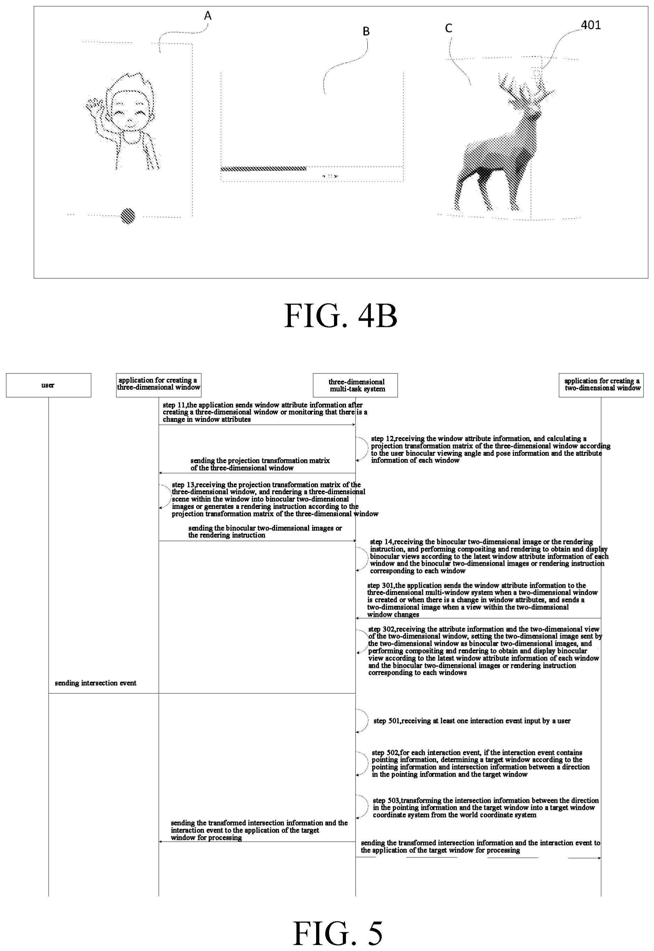

For example, as shown in FIG. 4B, a two-dimensional window A for video communication and two three-dimensional windows B and C are displayed simultaneously, wherein the three-dimensional window B plays a three-dimensional video (the three-dimensional effect is not shown in the figure, and the specific experience is similar to watching a 3D movie with glasses), while the three-dimensional window C displays a three-dimensional model and supports 360° observation and interaction. In specific implementation, users are also supported in customizing the backgrounds of the window interfaces.

This embodiment enables simultaneous display of two-dimensional and three-dimensional windows, thereby enhancing the user experience.

In a further embodiment of the present disclosure, on the basis of displaying a plurality of three-dimensional windows and/or two-dimensional windows, users may also control each of the three-dimensional windows. To be specific, as shown in FIG. 5, the three-dimensional multi-window system also executes the following steps:
step 501, receiving at least one interaction event input by a user;
step 502, for each interaction event, if the interaction event contains pointing information, determining a target window according to the pointing information and intersection information between a direction in the pointing information and the target window; and
step 503, transforming the intersection information between the direction in the pointing information and the target window from the world coordinate system to a coordinate system of a target window, and sending the transformed intersection information and the interaction event to the application of the target window for processing.

In implementation, for each interaction event, if the interaction event does not contain pointing information, the window currently in an activated state is taken as the target window, and the interaction event is sent to the target window.

In step 501, the interaction event of the window may be input by a user via control device such as a handle, gesture, voice, eye movement, head control, a mouse and keyboard.

The interaction events input through some control devices contain pointing information, such as a handle, gesture, eye tracking, head control, and a mouse. The pointing information may be regarded as a ray originating from the position of the control device and extending infinitely outward using the 3Dof or 6Dof information (including position and rotation) of the control device, and the direction of the ray is determined by the pose (rotation) of the control device. Alternatively, the pointing information also determines the interaction object through direct contact, such as touching a button with a finger. The interaction events input through some control devices do not contain pointing information, such as voice, and a keyboard, and these interaction events will be sent to the window currently in an activated state, wherein the way to determine the window in an activated state includes: a newly created window or a window with which the user has most recently interacted actively.

The interaction events also include instruction events, which include, but are not limited to, zooming the window in or out, moving the window's position, rotating the window, entering the window's interior, closing the window, and creating a new window, etc.

When step 502 is executed, the target window and the intersection information may be determined using a three-dimensional ray casting mechanism or a collision detection method, etc. To be specific, this step includes: first performing an intersection calculation according to the pointing information and the position information of the windows already displayed in the three-dimensional multi-window system to determine the window through which the pointing ray passes and the intersection information between the direction in the pointing information and the target window; when a plurality of windows are passed through by the pointing ray, the first window that is passed through by the pointing ray is taken as the target window. When the pointing ray does not pass through any windows, the target window cannot be determined, and the user interaction event will not be sent to any application to which any windows belong, but some global operations may be executed by the system logic, such as calling up the system menu, etc. The specific implementation process of intersection calculation can refer to the prior art, and will not be elaborated here.

When one user or a plurality of users use a plurality of pointing control devices, such as two handles, at the same time, there will be a plurality of rays pointing to one or more windows. In specific implementation, the interaction events relating to the rays will be sent to the target windows relating to the rays. For example, if the ray of the left hand points to window A, the key-press event of the left hand is sent to window A, and if the ray of the right hand points to window B, the key-press event of the right hand is sent to window B.

By step 503, the target window is enabled to respond directly when receiving an interaction event. To be specific, an application logic is triggered according to the interaction event to modify the content of the scene.

In implementation, a user may switch between the window states and the three-dimensional scenes within a window by position movement (such as moving the head, hands, body, etc.). When the interaction event is to enter the interior of the window, an immersive state is entered, for which it can be regarded that the window size is infinitely large, and at this point the user can view all 360 degrees content within the target window. When the user moves to enter the interior of a certain window, that is, when the binocular position is within the range of the window, the near plane and far plane of the projection transformation matrix of the window are set to the same value as the global projection transformation matrix. That is, when the user moves to enter the inside of a certain window, the user can see the complete scene inside the window, which is equivalent to the effect of the window being in the immersive mode, and the scene of this window occupies the entire field of view of the user.

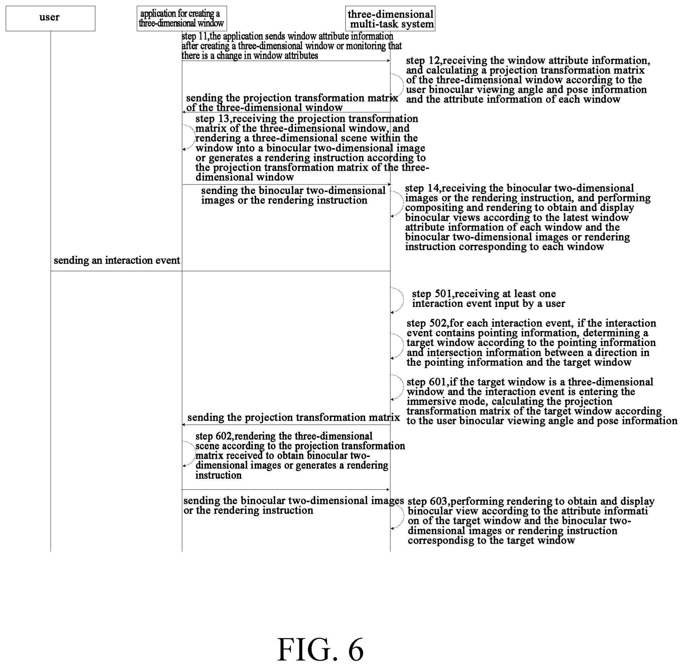

As shown in FIG. 6, when the target window is a three-dimensional window and the interaction event is to enter the immersive mode of the target window, the multi-window processing process in the three-dimensional space includes:
step 601, in which the three-dimensional multi-window system calculates a projection transformation matrix (i.e. global projection transformation matrix) of the target window according to the user binocular viewpoint and pose information, and sends the projection transformation matrix to the application of the target window;
step 602, in which the application of the target window renders the three-dimensional scene according to the projection transformation matrix received to obtain binocular two-dimensional images or generates a rendering instruction, and sends the binocular two-dimensional images or the rendering instruction to the three-dimensional multi-window system; and
step 603, in which the three-dimensional multi-window system performs rendering to obtain and display binocular views according to the attribute information of the target window and the binocular two-dimensional images or rendering instruction corresponding to the target window.

This embodiment enables transition from the window state to the immersive state.

In a further embodiment, when the target window enters the immersive state, the above-mentioned steps 11 to 14 or steps 301 to 302 are continued to be executed.

This embodiment can ensure that after entering the immersive state, the user can still trigger the display of multiple windows, thereby meeting the user's need to operate multiple windows while in the immersive state. For example, while watching 3D video content, if the user has a need to reply to a message, the user can create a communication window, thereby achieving the effect of replying to messages while watching the video.

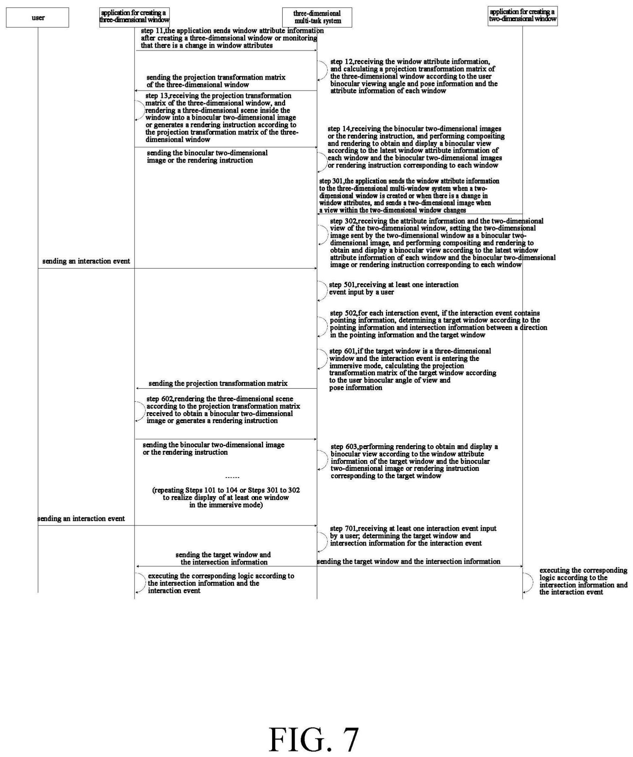

In an embodiment of the present disclosure, as shown in FIG. 7, on the basis of the superimposed display of a plurality of windows in the immersive mode, the multi-window processing method in a three-dimensional space further includes:
step 701, in which the three-dimensional multi-window system receives at least one interaction event input by a user.

For each interaction event, if the interaction event includes pointing information, a window to which a pixel within the range pointed to by the pointing information belongs and the intersection information are determined, the intersection information may also determine the interaction object through direct contact, such as touching a button with a finger, and the window to which a pixel within the range pointed to by the pointing information belongs is taken as the target window; the intersection information is transformed into the coordinate system of the target window according to the transformation matrix, and the transformed intersection information and the interaction event are sent to the application of the target window for processing.

For each interaction event, if the interaction event does not include pointing information, a currently active window is taken as the target window, and the interaction event is sent to the target window.

Step 702, in which the application executes the corresponding logic according to the intersection information and the interaction event. When the displayed view changes, the above-mentioned steps 12 to 14 or steps 301 to 302 are executed.

When exiting the immersive state and entering a multi-window display mode, composite display of windows can be achieved by using the method described in the above-mentioned steps 11 to 14. Meanwhile, the user can also control and see the view within the three-dimensional window.

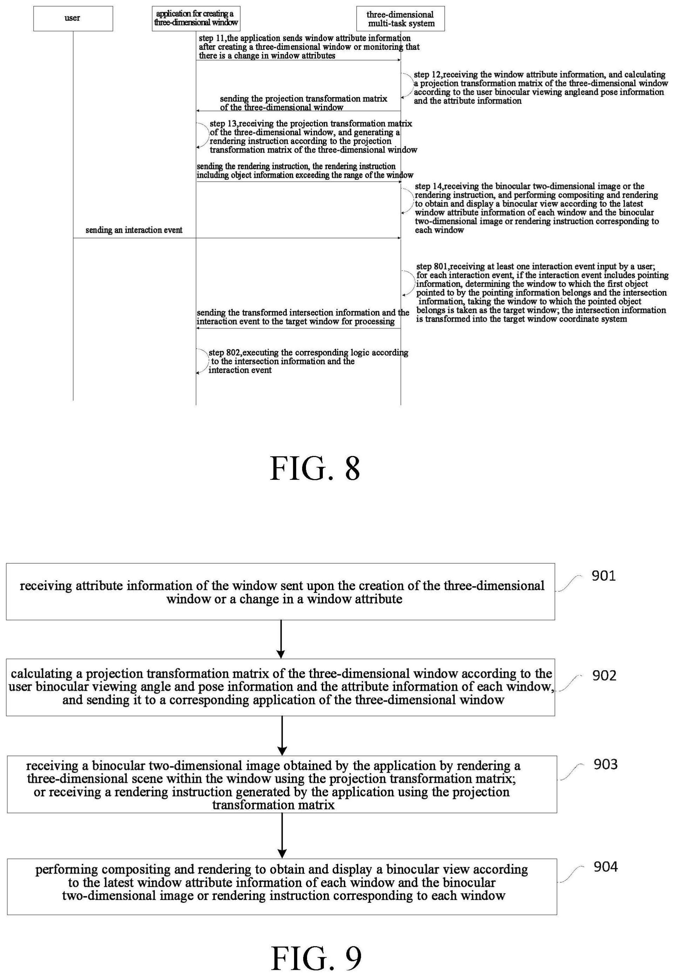

In an embodiment of the present disclosure, in the aforementioned step 13, when the three-dimensional multi-window system receives the rendering instruction generated by the three-dimensional window using the projection transformation matrix and the rendering instruction contains object information exceeding the range specified by the window size attribute, as shown in FIG. 8, after the composite display, the method further includes:
step 801, in which the three-dimensional multi-window system receives at least one interaction event input by a user; for each interaction event, if the interaction event includes pointing information, a window to which the first object pointed to by the pointing information belongs and the intersection information are determined, the intersection information may also determine the interaction object through direct contact, such as touching a button with a finger, and the window to which the pointed object belongs is taken as the target window; the intersection information is transformed into the coordinate system of the target window according to the transformation matrix, and the transformed intersection information and the interaction event are sent to the target window for processing; and
step 802, in which the application executes the corresponding logic according to the intersection information and the interaction event. When the displayed view changes, the above-mentioned steps 12 to 14 or steps 301 to 302 are executed.

This embodiment enables interaction between the objects displayed in each window, further enhancing the users' interaction experience.

In an embodiment of the present disclosure, in order to facilitate the user's control of windows, decoration information is further provided on the windows. To be specific, when step 11 is executed, window decoration information is also received. The window decoration information includes a UI control for controlling a window. The UI control includes, but is not limited to, a zoom-in control, a zoom-out control, a close control, etc. In specific implementation, the decoration information may also include a title bar, etc.

After rendering and obtaining the binocular view in step 14, the method further includes: adding window decoration information to the binocular view according to the attribute information of the window. The addition result is shown as window decoration information 401 in FIG. 4B.

In implementation, in addition to the UI control, the window decoration information may also include an animation display control to make the decoration present an animation effect, integrate with the background, and enhance the interest.

In an embodiment of the present disclosure, for the projection transformation matrix of each three-dimensional window, before the three-dimensional multi-window system sends the projection transformation matrix of the three-dimensional window in step 12, the method further executes the following steps: judging whether the three-dimensional window is within the user's field of view according to the attribute information of the three-dimensional window and the user binocular viewpoint and pose information; if not, not sending the projection transformation matrix to the three-dimensional window, and if yes, sending the projection transformation matrix to the three-dimensional window; or

before the three-dimensional multi-window system calculates the projection transformation matrix of the three-dimensional window according to the user binocular viewpoint and pose information and the attribute information of each window and sends the projection transformation matrix in step 12, the method further executes the following steps: for the attribute information of each window, judging whether the three-dimensional window is within the user's field of view according to the attribute information of the window and the user binocular viewpoint and pose information; if yes, calculating the projection transformation matrix of the three-dimensional window.

Herein, the visible range of a window interface can be regarded as the range of the viewing frustum represented by the global projection transformation matrix. The user's field of view, i.e., which windows can be seen by the user, is determined by combining the global projection transformation matrix with the user binocular viewpoint and pose information.

This embodiment can save the performance of application window rendering and system rendering, thereby improving the efficiency of viewing composition.

In an embodiment of the present disclosure, after receiving the rendering instruction sent by the application of the three-dimensional window, the three-dimensional multi-window system transforms the position information with respect to the window coordinate system in the rendering instruction into the world coordinate system, and performs compositing and rendering according to the latest rendering instructions of all the windows after transformation and the latest attribute information of window for every window to obtain binocular views.

In implementation, due to different update frequencies of window views, when the view of one window within the user's field of view changes, the compositing and rendering process is performed.

The window creation and window view change may be triggered when a window responds to a user interaction event.

In some embodiments, system rendering and application window rendering can also be used in a mixed manner. To be specific, the above step 14 is to perform compositing and rendering according to the latest binocular two-dimensional images of the windows and latest attribute information of the window, as well as the latest rendering instructions of the windows and latest attribute information of the window to obtain and display binocular views.

In some embodiments, the rendering instruction of a window includes: metadata of a rendering object. The metadata includes descriptive information and attribute information of the rendering object. The descriptive information includes, for example, geometric information (shape, size, etc.), text content and material information, etc. The attribute information includes, for example, position, rotation, scaling, etc. The metadata may also be a rendering object model, and the system may generate a rendering object image according to the rendering object model. In implementation, the attribute information may be specified by a user to enable interaction with the window, thereby enriching the user experience.

In some embodiments, the metadata may also include a motion model, which specifies the movement rules of the object. For example, if the object is a butterfly, the motion model of the butterfly defines the movement rules of its fluttering. The three-dimensional multi-window system can calculate in real time the incremental metadata and incremental pose information of the object according to the motion model, which, after the coordinate system transformation is completed, are composited and rendered together with the contents in the other windows to obtain dynamic binocular views.

In this way, the amount of data transmission between the application and the system can be reduced, and the efficiency of view generation can be improved.

In some embodiments, the user interaction event corresponds to a series of adjusting operations. After execution of the adjusting operations, the application window generates a rendering instruction including incremental information and/or pose incremental information according to the change information before and after the adjustment and sends it to the system. The system performs compositing and rendering according to the received rendering instruction and the user binocular viewpoint and pose information.

An embodiment of the present disclosure further provides a multi-window processing method applied to a three-dimensional multi-window system side, which, as shown in FIG. 9, includes:
step 901, receiving attribute information of the window sent upon the creation of the three-dimensional window or a change in a window attribute;
step 902, calculating a projection transformation matrix of the three-dimensional window according to the user binocular viewpoint and pose information and the attribute information of each window, and sending the projection transformation matrix to the application of the corresponding three-dimensional window;
step 903, receiving binocular two-dimensional images obtained by the application by rendering a three-dimensional scene within the window using the projection transformation matrix; or receiving a rendering instruction generated by the application using the projection transformation matrix; and
step 904, performing compositing and rendering according to the latest attribute information of the window for each window and the binocular two-dimensional images or rendering instruction corresponding to each window to obtain and display binocular views.

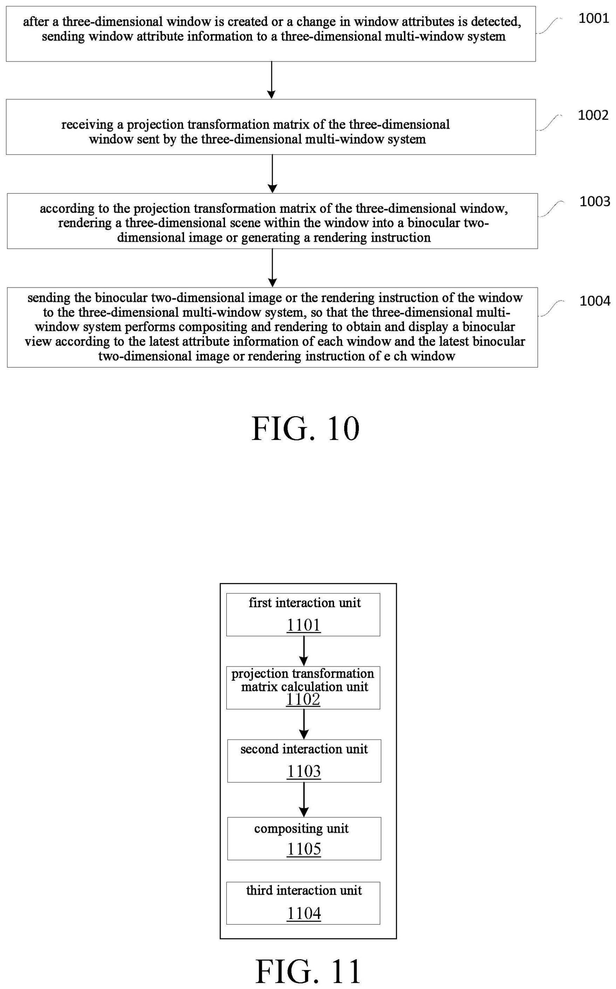

An embodiment of the present disclosure further provides a multi-window processing method applied to an application side, which, as shown in FIG. 10, includes:
step 1001, after a three-dimensional window is created or a change in a window attribute is monitored, sending attribute information of the window to a three-dimensional multi-window system;
step 1002, receiving a projection transformation matrix of the three-dimensional window sent by the three-dimensional multi-window system, wherein the projection transformation matrix of the three-dimensional window is calculated by the three-dimensional multi-window system according to the user binocular viewpoint and pose information and the attribute information of the window;
step 1003, according to the projection transformation matrix of the three-dimensional window, rendering a three-dimensional scene within the window into binocular two-dimensional images or generating a rendering instruction; and
step 1004, sending the binocular two-dimensional images or the rendering instruction of the window to the three-dimensional multi-window system, so that the three-dimensional multi-window system performs compositing and rendering according to the latest attribute information of each window and the latest binocular two-dimensional images or rendering instruction of each window to obtain and display binocular views.

The attribute information of the windows in step 1001 includes: window position, window size, rotation, window dimension type, and window canvas information. The initial value of the attribute information of the window is specified by an application and may be set arbitrarily. Subsequent adjustments can be made by the system or by the user.

The specific implementation process of rendering a three-dimensional scene into a two-dimensional image in step 1003 can refer to the prior art, and is not defined by the present disclosure.

According to the present disclosure, the system determines the projection transformation matrix according to the attribute information of the window provided by the application and the user binocular viewpoint and pose information, the application renders the three-dimensional system within the window into binocular two-dimensional images or generates a rendering instruction according to the projection transformation matrix, and the system performs compositing and rendering to obtain binocular views according to the binocular two-dimensional images or rendering instructions of all the windows. This enables the display of multiple three-dimensional windows in an extended reality device, thereby providing the user with more interactive scenarios and enhancing the user experience.

Based on the same inventive concept, the present disclosure further provides a multi-window processing device in a three-dimensional space, as described in the following embodiments. Since the principle of solving problems by the multi-window processing device in a three-dimensional space is similar to that of the multi-window processing method in a three-dimensional space, the implementation of the multi-window processing device in a three-dimensional space can refer to the multi-window processing method in a three-dimensional space, and no further elaboration will be given on the repeated parts.

To be specific, as shown in FIG. 11, the multi-window processing device in a three-dimensional space applied in a three-dimensional multi-window system includes:
a first interaction unit 1101 for receiving attribute information of the window sent upon the creation of the three-dimensional window or a change in a window attribute;
a projection transformation matrix calculation unit 1102 for calculating a projection transformation matrix of the three-dimensional window according to the user binocular viewpoint and pose information and the attribute information of each window, and sending the projection transformation matrix to an application of the three-dimensional window;
a second interaction unit 1103 for receiving binocular two-dimensional images obtained by the application by rendering a three-dimensional scene with the window using the projection transformation matrix; or receiving a rendering instruction generated by the application using the projection transformation matrix;
a third interaction unit 1104 for receiving an interaction event of a user, and judging an interaction target application of the interaction event, and sending the interaction event to the target application;
a compositing unit 1105 for performing compositing and rendering according to the latest attribute information of the window for each window and the binocular two-dimensional images or rendering instruction corresponding to each window to obtain and display binocular views.

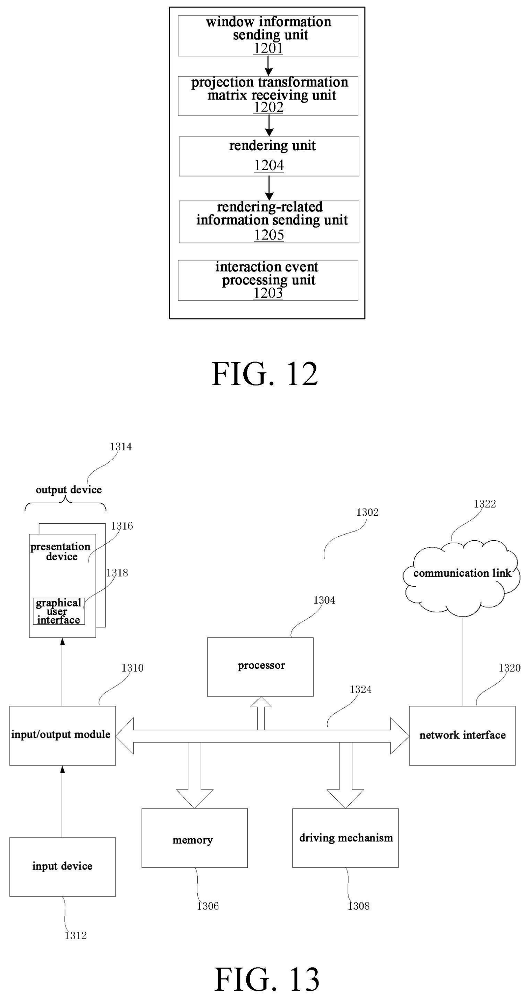

As shown in FIG. 12, the multi-window processing device in a three-dimensional space applied in a three-dimensional window application includes:
a window information sending unit 1201 for sending attribute information of the windows to a three-dimensional multi-window system after a three-dimensional window is created or a change in a window attribute is monitored;
a projection transformation matrix receiving unit 1202 for receiving a projection transformation matrix of the three-dimensional window sent by the three-dimensional multi-window system, wherein the projection transformation matrix of the three-dimensional window is calculated by the three-dimensional multi-window system according to the user binocular viewpoint and pose information and the attribute information of the window;
an interaction event processing unit 1203 for receiving an interaction event distributed by the system for the application, and executing a corresponding application logic to process the interaction event;
a rendering unit 1204 for rendering a three-dimensional scene within the window into binocular two-dimensional images or generating a rendering instruction according to the projection transformation matrix of the three-dimensional window;
a rendering-related information sending unit 1205 for sending the binocular two-dimensional images or the rendering instruction of the window to the three-dimensional multi-window system, so that the three-dimensional multi-window system performs compositing and rendering according to the latest attribute information of each window and the latest binocular two-dimensional images or rendering instruction of each window to obtain and display binocular views.

Through implementation of the technical solution of the present disclosure, the three-dimensional space displayed on an extended reality device can be divided into multiple subspaces (one per window), and the subspaces can be independent of each other, or interact with each other. For example, the scene of window B may be controlled by triggering the button of window A. The linkage effect between the windows may be determined by the internal logics of the applications. Users can interact with the scenes within each subspace separately, improving the flexibility of using the extended reality device and enhancing the user experience.

An embodiment of the present disclosure further provides an extended reality device. As shown in FIG. 13, the extended reality device 902 may comprise one or more processors 1304, such as one or more central processing units (CPU), each of which can implement one or more hardware threads. The extended reality device 1302 may further include a memory 1306, configured to store any kind of information such as code, settings, data, etc. For example, and without limitation, the memory 1306 may include any one or a combination of more of the following: any type of RAM, any type of ROM, flash memory devices, hard disks, optical discs, etc. More generally, any memory can use any technology to store information. Further, any memory can provide volatile or non-volatile retention of information. Further, any memory can represent a fixed or removable part of the extended reality device 1302. In one case, when the processor 1304 executes associated instructions stored in any memory or combination of memories, the extended reality device 1302 can perform any operation of the associated instructions. The extended reality device 1302 also includes one or more drive mechanisms 1308 for interacting with any memory, such as a hard disk drive mechanism, an optical disc drive mechanism, etc.

The extended reality device 1302 may further include an input/output module 1310 (I/O), which is used to receive various inputs (via an input device 1312) and provide various outputs (via an output device 1314). A specific output mechanism may include a presentation device 1316 and an associated graphical user interface (GUI) 1318. In other embodiments, the extended reality device may not include the input/output module 1310 (I/O), the input device 1312 and the output device 1314, but may function solely as an extended reality device within a network. The extended reality device 1302 may also include one or more network interfaces 1320 used to exchange data with other devices via one or more communication links 1322. The above-described components are coupled together by one or more communication buses 1324.

The communication link 1322 may be implemented in any way, such as through a local area network, a wide area network (e.g., the Internet), point-to-point connection, or any combination thereof. The communication link 1322 may include any combination of a hardwired link, a wireless link, a router, a gateway function, a name server, etc. dominated by any protocol or combination of protocols.

An embodiment of the present disclosure further provides a computer readable storage medium on which a computer program is stored, and upon execution of the computer program by a processor, the steps of the above-mentioned method are executed.

An embodiment of the present disclosure further provides a computer readable instruction, wherein when a processor executes the instruction, a program, when executed, causes the processor to perform the method described in any of the above-mentioned embodiments.

It should be understood that, in various embodiments of the present disclosure, the sequence numbers of the processes do not imply the order of execution. The execution order of the processes should be determined by their functions and internal logic, and should not constitute any limitation on the implementation process of the embodiments of the present disclosure.

It should also be understood that, in the embodiments of the present disclosure, the term "and/or" merely describes an association relationship between associated objects, indicating that there can be three types of relationships. For example, A and/or B can represent three situations: A exists alone, A and B exist at the same time, and B exists alone. In addition, in the present disclosure, the character "/" generally indicates that the associated objects are in an "or" relationship.

Those skilled in the art will appreciate that the units and algorithm steps of each example described in the embodiments disclosed in the present disclosure can be implemented by electronic hardware, computer software or a combination of both. To clearly illustrate the interchangeability of hardware and software, the composition and steps of each example have been described in the above according to their functions. Whether these functions are executed by hardware or software depends on the specific application and design constraint conditions of the technical solution. Professional technicians may use different methods for each specific application to achieve the described functions, but such implementation should not be regarded as exceeding the scope of the present disclosure.

A person skilled in the art can clearly understand that, for the convenience and conciseness of description, the specific working processes of the systems, devices and units described above can refer to the corresponding processes in the embodiments of the above method, and will not be elaborated here.

In the several embodiments provided by the present disclosure, it should be understood that the disclosed systems, devices and methods can be realized in other ways. For example, the device embodiments described above are merely illustrative. For example, the division of the units is only a logical functional division. In actual implementation, there may be other division methods, for example, a plurality of units or components may be combined or integrated into another system, or some features may be ignored or not executed. In addition, the mutual coupling or direct coupling or communication connection shown or discussed may be indirect coupling or communication connection through some interfaces, devices or units, or may be electrical, mechanical or other forms of connection.

The units described as separate components may be or may not be physically separated, and the components displayed as units may be or may not be physical units, that is, they may be located in one place or distributed on a plurality of network units. Some or all of the units can be selected according to actual need to achieve the purpose of the solutions of the embodiments of the present disclosure.

In addition, in each embodiment of the present disclosure, each functional unit may be integrated into a processing unit, or each unit may exist physically separately, or two or more units may be integrated into one unit. The integrated units may be implemented in the form of hardware, and may also be implemented in the form of software functional units.

When the integrated units are implemented in the form of software functional units and sold or used as an independent product, they can be stored in a computer-readable storage medium. Based on such understanding, the technical solution of the present disclosure in essence, or the part of it that contributes to the prior art, or all or part of the technical solution, may be reflected in the form of a software product, which is stored in a storage medium and includes several instructions to enable a computer device (which may be a personal computer, a server, or a network device, etc.) to perform all or part of the steps of the method described in each embodiment of the present disclosure. The above storage medium includes: a U-disk, a portable hard disk, a read-only memory (ROM), a random access memory (RAM), a magnetic disk, or an optical disc, and various other media that can store program codes.

E 02091 The specific embodiments are applied in the present disclosure to elaborate the principle and implementation modes of the present disclosure. The description of the above embodiments is only used to help understand the method and core idea of the present disclosure. At the same time, for a person having ordinary skill in the art, based on the idea of the present disclosure, there will be changes in the specific implementation modes and application scope. In conclusion, the content of this specification should not be understood as a limitation of the present disclosure.

## Claims

1. A multi-window processing method in a three-dimensional space, comprising:
step S101 of receiving attribute information of one or more windows, wherein the windows comprise a two-dimensional window and/or a three-dimensional window;
step S103 of generating a corresponding transformation matrix according to the attribute information of the one or more windows; and
step S105 of processing the one or more windows based on the transformation matrix.

2. The multi-window processing method in a three-dimensional space according to claim 1, wherein the receiving of the attribute information of the one or more windows comprises: receiving attribute information of windows generated by an event from the one or more windows.

3. The multi-window processing method in a three-dimensional space according to claim 1, wherein the step S105 comprises:
transforming an event from the three-dimensional space to the one or more windows according to the transformation matrix, and sending the transformed event to a corresponding window.

4. The multi-window processing method in a three-dimensional space according to claim 1 or 3, wherein the processing of the one or more windows based on the transformation matrix further comprises:
processing, by the one or more windows, an event according to the one or more windows' own logic to generate corresponding attribute information of the windows; and
compositing the attribute information of the windows generated by the one or more windows.

5. The multi-window processing method in a three-dimensional space according to claim 1, wherein attribute information of a window comprises a coordinate system, and/or position, and/or rotation, and/or size.

6. The multi-window processing method in a three-dimensional space according to claim 5, wherein attribute information of a window comprises window decoration information for controlling a window.

7. The multi-window processing method in a three-dimensional space according to claim 6, wherein attribute information of a window comprises display information, and/or interaction information, and/or self-logic triggering information.

8. The multi-window processing method in a three-dimensional space according to claim 7, wherein the display information is generated when a window is created or there is a change in a window attribute, or when a change in a user's viewpoint is triggered.

9. The multi-window processing method in a three-dimensional space according to claim 1, wherein the processing of the one or more windows based on the transformation matrix comprises:
determining a projection transformation matrix based on attribute information of a window and user viewpoint and pose information; and
processing the one or more windows based on the projection transformation matrix.

10. The multi-window processing method in a three-dimensional space according to claim 9, wherein the step S105 further comprises:
sending the projection transformation matrix to a corresponding window;
generating, by the corresponding window, a rendering instruction using the projection transformation matrix; and
performing compositing and rendering according to latest attribute information of the window for the corresponding window and the rendering instruction to obtain and display binocular views of the three-dimensional space.

11. The multi-window processing method in a three-dimensional space according to claim 9, wherein the step S105 comprises:
sending the projection transformation matrix to a corresponding window;
rendering, by the corresponding window, a scene within the window using the projection transformation matrix to obtain binocular two-dimensional images; and
performing compositing and rendering according to latest attribute information of the window for the corresponding window and latest binocular two-dimensional images corresponding to the corresponding window to obtain and display binocular views of the three-dimensional space.

12. The multi-window processing method in a three-dimensional space according to claim 1, wherein the step S105 further comprises:
generating, by the window, a rendering instruction according to an application logic; and
performing compositing and rendering according to latest attribute information of the window for the window and the rendering instruction to obtain and display binocular views of the three-dimensional space.

13. The multi-window processing method in a three-dimensional space according to claim 11, wherein the step S105 further comprises:
sending the projection transformation matrix to the corresponding window;
generating, by the corresponding window, a rendering instruction using the projection transformation matrix; and
performing compositing and rendering according to the latest attribute information of the window for the corresponding window and the rendering instruction to obtain and display binocular views of the three-dimensional space.

14. The multi-window processing method in a three-dimensional space according to any one of claims 10 to 13, wherein decoration content is added based on window decoration information prior to performing compositing and rendering, and compositing and rendering are completed to obtain and display the binocular views of the three-dimensional space.

15. The multi-window processing method in a three-dimensional space according to claim 7, wherein the interaction information is generated when an interaction event of a window is produced by a user input.

16. The multi-window processing method in a three-dimensional space according to claim 15, wherein the step S105 comprises:
generating the interaction information based on the interaction event of the window and the attribute information of the window; and
generating a coordinate system of a target window based on the interaction information and the interaction event of the window, and sending the coordinate system of the target window to the target window.

17. The multi-window processing method in a three-dimensional space according to claim 16, wherein the target window has an immersive mode and a window mode.

18. The multi-window processing method in a three-dimensional space according to claim 6, wherein self-logic triggering information is generated when an application's own logic is changed.

19. The multi-window processing method in a three-dimensional space according to claim 18, wherein the self-logic triggering information is used to modify the transformation matrix, to indicate a switch between an immersive mode and a window mode, or to trigger the window decoration information.

20. The multi-window processing method in a three-dimensional space according to claim 17, wherein when the target window enters the immersive mode, a subspace corresponding to the target window is transformed into the three-dimensional space.

21. The multi-window processing method in a three-dimensional space according to claim 20, wherein other windows are remained unchanged, so that superimposed display of contents of the target window and contents of the other windows is realized.

22. The multi-window processing method in a three-dimensional space according to claim 20, wherein when attribute information of a window exceeding a range of the target window is received, the interaction information is transformed into the coordinate system of the target window, and the transformed interaction information and the interaction event are sent to the target window for processing.

23. The multi-window processing method in a three-dimensional space according to claim 1, wherein the attribute information of the windows is updated based on user operations or triggering of an application's own logic.

24. A multi-window processing system in a three-dimensional space, comprising:
a receiving unit for receiving attribute information of one or more windows, wherein the windows comprise a two-dimensional window and/or a three-dimensional window;
a transformation matrix generation unit for generating a corresponding transformation matrix according to the attribute information of the one or more windows; and
a processing unit for processing the one or more windows based on the transformation matrix.

25. An extended reality device, comprising a memory, a processor, and a computer program stored in the memory and executable on the processor, wherein the processor, when executing the computer program, implements instructions of the method according to any one of claims 1 to 23.
